# EUROPEAN PATENT APPLICATION

(11) **EP 4 807 947 A1**
(43) Date of publication of application: **16.09.2026**
(21) Application number: 26160089.4
(22) Date of filing: 23.02.2026
(51) Int. Cl.: H02K 1/276

(54) **ROTOR**

(30) Priority: 06.03.2025 JP 2025035693
(71) Applicant: AISIN CORPORATION, Aichi 448-8650 (JP)
(72) Inventor: Furuta, Yasunari, 448-8650 Aichi (JP); Mori, Takuma, 448-8650 Aichi (JP); Ando, Shunta, 448-8650 Aichi (JP)
(74) Representative: Kramer Barske Schmidtchen Patentanwälte PartG mbB

(57) **Abstract**

A rotor (20) of a rotary electric machine (1) includes a rotor shaft (21) serving as a rotation axis, an annular rotor core (22) having a first hole (22A) at a center in which the rotor shaft is disposed, and a magnet (MG) disposed in a circumferential direction of the rotor core and provided for each magnetic pole. The rotor core includes a plurality of second holes (22B) provided in the circumferential direction and in which the magnet is disposed, and a plurality of third holes (22C) provided in the circumferential direction and located radially inward with respect to the second holes. The third hole includes an outer sidewall portion (OW), an inner sidewall portion (IW) located radially inward with respect to the outer sidewall portion, and a pair of sidewall portions (SW) provided on both sides of the outer sidewall portion and the inner sidewall portion and connecting the outer sidewall portion and the inner sidewall portion. The inner sidewall portion has a distance changing portion (IW1) whose distance from a rotation center of the rotation axis changes. The inner sidewall portion does not protrude radially inward.

## Description

### TECHNICAL FIELD

This disclosure relates to a rotor of a rotary electric machine.

### BACKGROUND DISCUSSION

JP 2012-143128A (Reference 1) discloses a rotor of an embedded magnet rotary electric machine including a disk-shaped rotor core, a rotary shaft fitted to a shaft hole provided in a central portion of the rotor core by interference fit, a plurality of pairs of rotor slots provided in a circumferential direction of the rotor core, a field permanent magnet fitted to the plurality of pairs of rotor slots such that magnetic poles adjacent to each other in the circumferential direction have different polarities, a salient pole portion formed on an upper surface of the field permanent magnet, and a bridge formed between each pair of rotor slots to connect the salient pole portion and the rotor core, in which a plurality of stress relaxation slits for relaxing stress concentration acting on innermost peripheral end portions of the rotor slots are formed on a circumference of the rotor core at positions closer to the rotary shaft than innermost peripheral portions of the plurality of pairs of rotor slots.

In Reference 1, it is described that according to the above configuration, a tensile stress in the circumferential direction acting on the innermost peripheral end portions of the rotor slots formed in the rotor core to which the rotary shaft is fitted by the interference fit is generated in a region closer to the shaft hole side than the pair of rotor slots of each magnetic pole, but the rotor core is provided with the plurality of stress relaxation slits on the circumference at positions closer to the rotary shaft than a region in which the plurality of pairs of rotor slots are provided in the circumferential direction, which is the same region where the tensile stress is generated, and thus the stress concentration on the innermost peripheral end portions of the rotor slots can be reduced.

A large bending stress is generated at inner and outer corner portions (hereinafter, also simply referred to as corner portions) in a radial direction of the stress relaxation slits (hereinafter, also referred to as a hole) of the rotor due to a centrifugal force during rotation of the rotary electric machine (also referred to as a motor).

In recent years, a rotation speed of a rotary electric machine increases, and accordingly, the stress applied to the corner portion of the hole of the rotor also increases, and the rotor may be damaged.

A need thus exists for a rotor of a rotary electric machine in which a stress applied to a corner portion of a hole for relaxing a stress of the rotor is reduced.

### SUMMARY

According to an aspect of this disclosure, a rotor of a rotary electric machine includes:
a rotor shaft serving as a rotation axis;
an annular rotor core having a first hole at a center in which the rotor shaft is disposed; and
a magnet disposed in a circumferential direction of the rotor core and provided for each magnetic pole, in which
the rotor core includes
   a plurality of second holes provided in the circumferential direction and in which the magnet is disposed, and
   a plurality of third holes provided in the circumferential direction and located radially inward with respect to the second holes,
the third hole includes
   an outer sidewall portion,
   an inner sidewall portion located radially inward with respect to the outer sidewall portion, and
   a pair of sidewall portions provided on both sides of the outer sidewall portion and the inner sidewall portion and connecting the outer sidewall portion and the inner sidewall portion,
the inner sidewall portion has a distance changing portion whose distance from a rotation center of the rotation axis changes, and
the inner sidewall portion does not protrude radially inward.

According to this disclosure, a rotor of a rotary electric machine is provided in which a stress applied to a corner portion of a hole for relaxing a stress of the rotor is reduced.

### BRIEF DESCRIPTION OF THE DRAWINGS

The foregoing and additional features and characteristics of this disclosure will become more apparent from the following detailed description considered with the reference to the accompanying drawings, wherein:
Fig. 1 is a cross-sectional view showing a rotary electric machine according to a first embodiment of this disclosure;
Fig. 2 is a cross-sectional view of a rotor according to the first embodiment of this disclosure;
Fig. 3 is a diagram showing a third hole according to the first embodiment of this disclosure and a third hole in the related art as a comparison target;
Fig. 4 is a diagram showing a shape of a sidewall portion according to a second embodiment of this disclosure;
Fig. 5 is a diagram showing an inclined state of a linear portion according to the second embodiment of this disclosure;
Fig. 6 is a diagram showing a shape of an inner sidewall portion according to a third embodiment of this disclosure; and
Fig. 7 is a diagram showing a rotor of a rotary electric machine according to a fourth embodiment of this disclosure.

### DETAILED DESCRIPTION

Hereinafter, aspects for carrying out this disclosure (hereinafter referred to as "embodiments") will be described in detail with reference to the accompanying drawings.

In addition, the same elements are given the same numbers or symbols throughout the description of the embodiments.

In addition, dimensional ratios in the drawings are different from actual dimensional ratios and are merely drawn to facilitate understanding of the description, it is not guaranteed that the same portions are drawn with the same dimensions among the drawings, and the shapes and the like in the drawings may be partially exaggerated for convenience of explanation.

Further, in the drawings, for the sake of clarity, a plurality of parts having the same attribute may be only partially denoted by reference numerals.

### <First Embodiment>

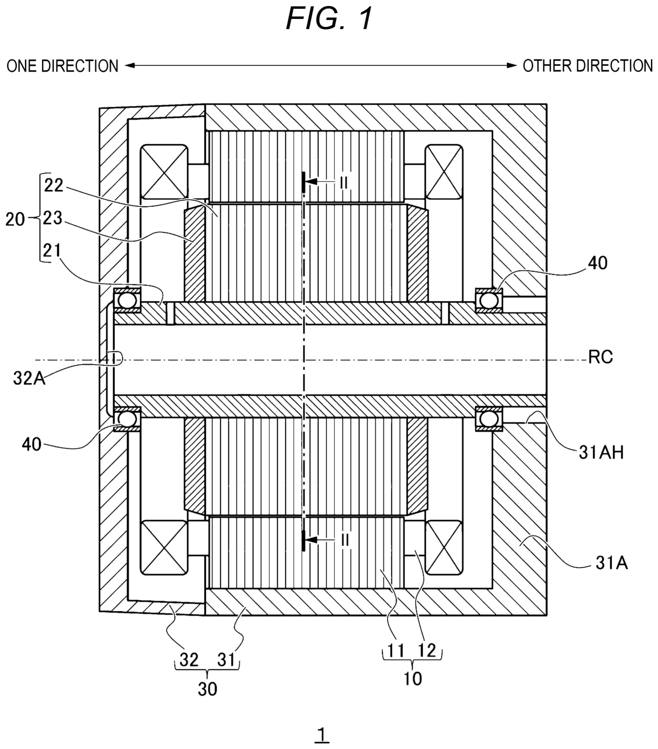

A rotor 20 of a rotary electric machine 1 according to a first embodiment of this disclosure will be described with reference to Figs. 1 to 3.

Fig. 1 is a cross-sectional view showing the rotary electric machine 1 according to the first embodiment of this disclosure, and is a cross-sectional view taken along a longitudinal direction of a rotor shaft 21.

Hereinafter, the longitudinal direction of the rotor shaft 21 serving as a rotation axis is referred to as an axial direction, a direction along a rotation direction of the rotor shaft 21 is referred to as a circumferential direction, and a direction on a plane orthogonal to the axial direction is referred to as a radial direction.

In the radial direction, a side away from the rotor shaft 21 is referred to as radially outward, and conversely, a side close to the rotor shaft 21 is referred to as radially inward.

The rotary electric machine 1 may be, for example, a vehicle driving motor used in a hybrid vehicle or an electric vehicle.

As shown in Fig. 1, the rotary electric machine 1 is an inner rotor type of machine, and includes a stator 10, the rotor 20 disposed radially inward with respect to the stator 10 and rotatable with respect to the stator 10, and a housing 30 that accommodates the stator 10 and the rotor 20.

Both ends of the rotor shaft 21 of the rotor 20 in the axial direction are rotatably attached to the housing by bearings 40 (ball bearings in this example), so that the rotor 20 is rotatably disposed with respect to the stator 10.

The housing 30 includes a main body portion 31 having a bottomed tubular shape that opens to one side (left side in Fig. 1) in the axial direction, and a lid portion 32 that closes an opening of the main body portion 31.

Specifically, in the main body portion 31, a through hole 31AH in which an end portion on the other side (end portion on the right side in Fig. 1) of the rotor shaft 21 is disposed is provided in a bottom portion 31A, and the rotor shaft 21 is rotatably supported by the bearing 40 at the through hole 31AH.

The rotor shaft 21 may extend to an outside of the housing 30 through the through hole 31AH of the bottom portion 31A.

In addition, the lid portion 32 has a recessed portion 32A that receives an end portion of the rotor shaft 21 on the one side, and the rotor shaft 21 is rotatably supported by the bearing 40 at the recessed portion 32A.

### Stator 10

The stator 10 includes an annular stator core 11 having a plurality of slots (not shown) and a stator coil 12 wound around the slots of the stator core 11.

For example, the stator core 11 may be a laminated core formed by laminating electromagnetic steel sheets, or may be a powder core obtained by press-molding metal powder.

### Rotor 20

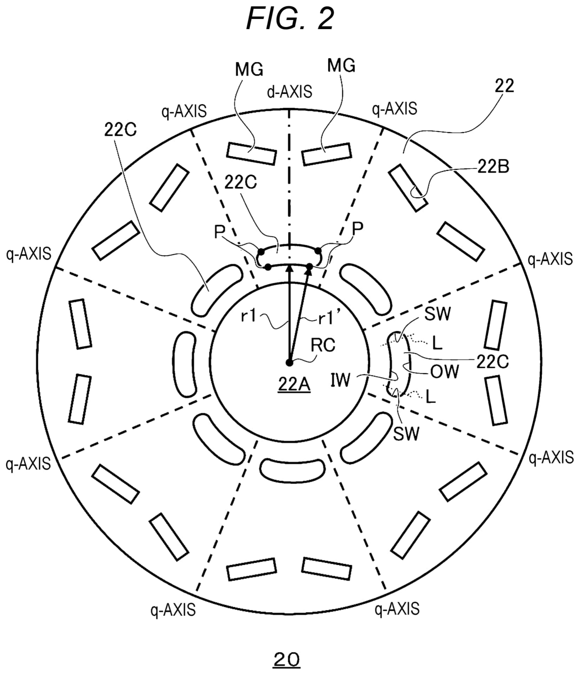

Fig. 2 is a cross-sectional view of the rotor 20 according to the first embodiment of this disclosure, and is a cross-sectional view taken along a line II-II in Fig. 1.

In Fig. 2, illustration of the rotor shaft 21 is omitted.

As shown in Fig. 1, the rotor 20 includes the rotor shaft 21 serving as the rotation axis, an annular rotor core 22 having a first hole 22A (see Fig. 2) at the center in which the rotor shaft 21 is disposed, end plates 23 provided at both end portions of the rotor core 22 in the axial direction, and magnets MG (see Fig. 2) arranged in the circumferential direction of the rotor core 22.

The end plates 23 may be omitted.

In the first embodiment, as shown in Fig. 1, the rotor shaft 21 is shown as a hollow cylinder through which the refrigerant can flow, but the rotor shaft 21 may have a solid columnar shape.

As shown in Fig. 2, the magnet MG is provided for each magnetic pole (region between q-axes), and in the first embodiment, a pair of magnets MG are provided line-symmetrically with respect to a d-axis located at a center of the magnetic pole in the circumferential direction.

In the first embodiment, the pair of magnets MG provided for each magnetic pole are arranged in a V shape opening radially outward, but may be arranged side by side in a straight line orthogonal to the d-axis with the d-axis interposed therebetween.

In addition, although Fig. 2 shows a case where there is one layer of the magnets MG in which the pair of magnets MG is provided for each magnetic pole in the circumferential direction, for example, the magnets MG may be further arranged radially inward in the circumferential direction, and two or more layers of the magnets MG may be provided.

### Rotor Core 22

In the first embodiment, as shown in Fig. 1, a case where the rotor core 22 is a laminated core formed by laminating annular electromagnetic steel sheets is shown, but the rotor core 22 is not limited to the laminated core, and may also be the powder core obtained by press-molding metal powder similarly to the stator core 11.

As shown in Fig. 2, the rotor core 22 includes the first hole 22A at the center in which the rotor shaft 21 is disposed, a plurality of second holes 22B provided in the circumferential direction and in which the magnets MG are disposed, and a plurality of third holes 22C provided in the circumferential direction and located radially inward with respect to the second holes 22B.

The first hole 22A is designed to have an inner diameter slightly smaller than an outer diameter of the rotor shaft 21 such that the rotor shaft 21 can be fixed by shrink fitting or the like.

Therefore, the rotor core 22 is subjected to a stress from the rotor shaft 21, and the third holes 22C play a role of relaxing the stress.

On the other hand, when the rotor 20 rotates, the centrifugal force generates a large bending stress at inner and outer corner portions P in the radial direction located circumferentially outward of the third hole 22C, and reduction of the stress by the shape of the third hole 22C will be described below.

As shown in Fig. 2, the third hole 22C includes an outer sidewall portion OW located radially outward, an inner sidewall portion IW located radially inward with respect to the outer sidewall portion OW, and a pair of sidewall portions SW (wall portions located circumferentially outward with respect to boundary lines L) provided on both sides of the outer sidewall portion OW and the inner sidewall portion IW and connecting the outer sidewall portion OW and the inner sidewall portion IW.

The following specifically describes that the stress at the inner and outer corner portions P in the radial direction located circumferentially outward of the third hole 22C (hereinafter, also simply referred to as "inner and outer corner portions P") is reduced by a shape of the inner sidewall portion IW.

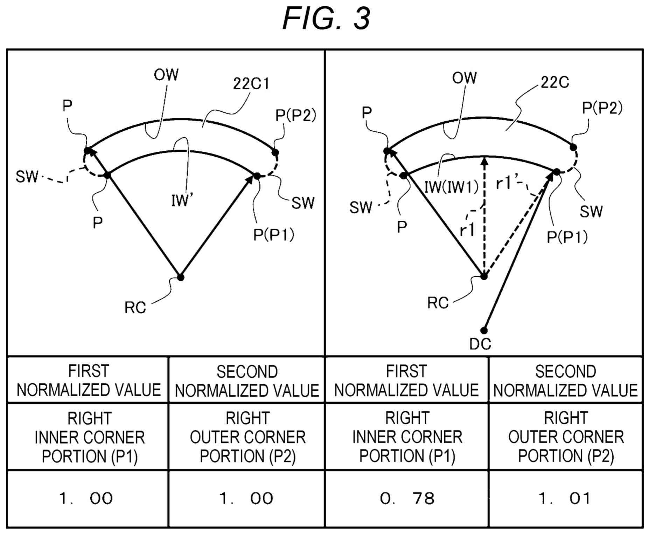

Fig. 3 is a diagram showing the third hole 22C according to the first embodiment of this disclosure and a third hole 22C1 in the related art as a comparison target, in which a left side shows a case of the third hole 22C1 according to a comparative example, and a right side shows the case of the third hole 22C according to the first embodiment.

Also in the comparative example, portions other than the third hole 22C1 are the same as those in the first embodiment.

As shown on the left side of Fig. 3, the outer sidewall portion OW and an inner sidewall portion IW' of the third hole 22C1 according to the comparative example are formed along a concentric circle centered on a rotation center RC of the rotor shaft 21 (rotation axis).

The sidewall portion SW of the third hole 22C1 according to the comparative example has a single R shape with a constant radius of curvature, and connects the outer sidewall portion OW and the inner sidewall portion IW'.

On the other hand, the outer sidewall portion OW of the third hole 22C according to the first embodiment is formed along a circle centered on the rotation center RC, and a distance from the rotation center RC is also the same as that of the outer sidewall portion OW of the third hole 22C1 according to the comparative example, but the inner sidewall portion IW is formed along a circle centered on a center DC different from the rotation center RC.

Therefore, the inner sidewall portion IW of the third hole 22C according to the first embodiment forms a distance changing portion IW1 in which the distance from the rotation center RC which is the rotation axis changes from a center side toward an outer side (sidewall portion SW side) in the circumferential direction of the third hole 22C.

That is, the distance changing portion IW1 according to the first embodiment is formed along the circle centered on the center DC different from the rotation center RC.

The sidewall portion SW of the third hole 22C according to the first embodiment also has the single R shape with the constant radius of curvature, and connects the outer sidewall portion OW and the inner sidewall portion IW.

Specifically, the inner sidewall portion IW (distance changing portion IW1) changes such that a distance r1' from the rotation center RC on the outer side (sidewall portion SW side) is longer than a distance r1 from the rotation center RC which is the rotation axis at the center of the third hole 22C in the circumferential direction.

Then, the stresses applied to the inner and outer corner portions P of the third hole 22C and the third hole 22C1 when a rotor in a rotor core including the third hole 22C1 according to the comparative example and the rotor 20 according to the first embodiment were rotated at a predetermined rotation speed were obtained by computer simulation.

Two inner corner portions P (left and right inner corner portions P in Fig. 3) in the circumferential direction (left-right direction in Fig. 3) located radially inward (lower side in Fig. 3) of the inner and outer corner portions P of the third hole 22C1 have substantially the same value, and two inner corner portions P in the circumferential direction located radially inward of the inner and outer corner portions P of the third hole 22C have substantially the same value.

In addition, two outer corner portions P (left and right outer corner portions P in Fig. 3) in the circumferential direction (left-right direction in Fig. 3) located radially outward (upper side in Fig. 3) of the inner and outer corner portions P of the third hole 22C1 have substantially the same value, and two outer corner portions P in the circumferential direction located radially outward of the inner and outer corner portions P of the third hole 22C have substantially the same value.

Therefore, Fig. 3 shows simulation results of an inner corner portion P1 and an outer corner portion P2 of the third hole 22C1 on the right side of Fig. 3, and simulation results of the inner corner portion P1 and the outer corner portion P2 of the third hole 22C on the right side of Fig. 3.

To be precise, the inner corner portion P is a portion of the sidewall portion SW that is located near a boundary between the inner sidewall portion IW and the distance changing portion IW1, and the sidewall portion SW, and the outer corner portion P is a portion of the sidewall portion SW that is located near a boundary between the outer sidewall portion OW and the sidewall portion SW.

In the third hole 22C1 according to the comparative example, a stress at the right inner corner portion P1 is high. When the stress is set as A (MPa), and a stress at the right inner corner portion P1 of the third hole 22C according to the first embodiment is set as B (MPa), as shown in Fig. 3, a value (also referred to as a first normalized value) obtained by normalizing the stress A (MPa) as a first reference stress was 1.00 [=A(MPa)/A(MPa)] for the comparative example, whereas the value was 0.78 [= B (MPa)/A (MPa)] for the first embodiment, which was found to be a reduction of 20% or more.

When a stress at the right outer corner portion P2 of the third hole 22C1 according to the comparative example is set as C (MPa), and a stress at the right outer corner portion P2 of the third hole 22C according to the first embodiment is set as D (MPa), Fig. 3 also shows a value (also referred to as a second normalized value) obtained by normalizing the stress C (MPa) as a second reference stress, and the value was 1.01 [= D (MPa)/C(MPa)] for the first embodiment, which was substantially the same as compared to 1.00 [= C (MPa)/C(MPa)] for the comparative example.

As described above, since the inner sidewall portion IW of the third hole 22C includes the distance changing portion IW1 in which the distance from the rotation center RC which is the rotation axis changes, the stress at the inner corner portion P1 of the third hole 22C due to the centrifugal force during the rotation of the rotor is significantly reduced as compared with the case of the inner sidewall portion IW' along the concentric circle in the related art.

In the inner sidewall portion IW of the third hole 22C, in a range in which the inner sidewall portion IW does not protrude radially inward, the stress at the inner corner portion P1 tends to decrease as the radius of curvature increases, and thus the inner sidewall portion IW may have a larger radius of curvature and a gentler shape.

Further, the inner sidewall portion IW not protruding radially inward specifically refers to that when an imaginary line connecting both end portions of the inner sidewall portion IW (end portions serving as boundaries between the inner sidewall portion IW and the pair of sidewall portions SW) is considered to be a straight line, the inner sidewall portion IW does not exceed radially inward beyond the imaginary line.

### <Second Embodiment>

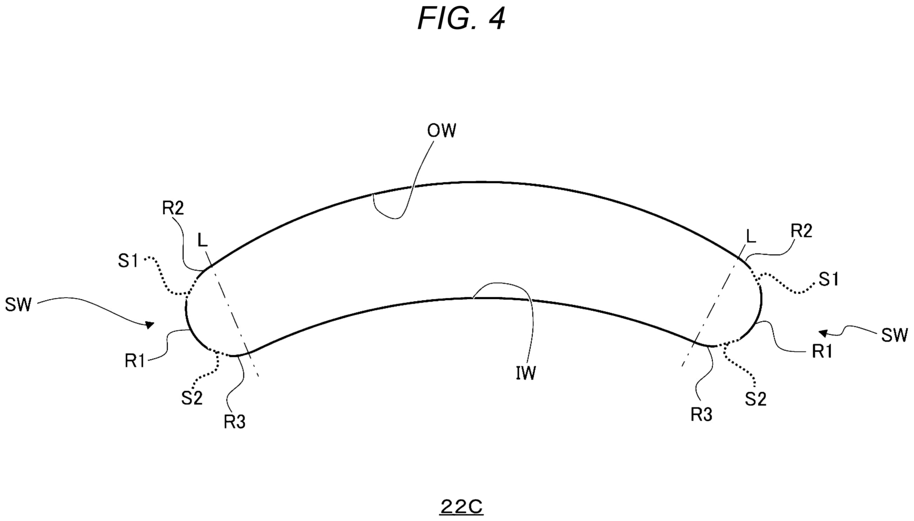

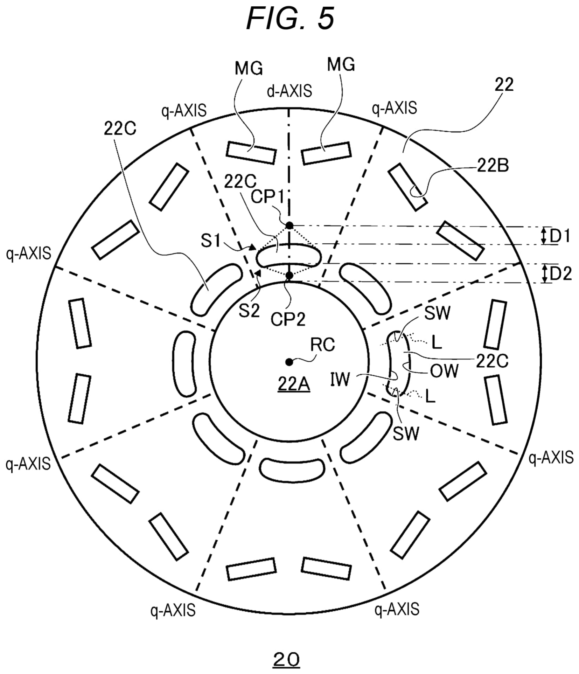

Next, the rotor 20 of the rotary electric machine 1 according to a second embodiment of this disclosure will be described mainly with reference to Figs. 4 and 5.

The basic configuration of the second embodiment is the same as that of the first embodiment, and a difference from the first embodiment is that a shape of the sidewall portion SW is further devised.

Therefore, in the following, the ingenuity in the shape of the sidewall portion SW will be mainly described, and the description of the same points as those in the first embodiment may be omitted.

Fig. 4 is a diagram showing the shape of the sidewall portion SW according to the second embodiment of this disclosure.

As shown in Fig. 4, in the second embodiment, the sidewall portion SW includes a central R portion R1, an outer R portion R2 connected to the outer sidewall portion OW, and a linear portion S1 connecting the central R portion R1 and the outer R portion R2.

In addition, the sidewall portion SW includes an inner R portion R3 connected to the inner sidewall portion IW, and a linear portion S2 connecting the central R portion R1 and the inner R portion R3.

Then, computer simulation was performed to obtain stresses applied to the inner and outer corner portions P (inner and outer corner portions P similar to the inner and outer corner portions P in Fig. 3) of the third hole 22C according to the second embodiment when only the outer R portion R2 and the linear portion S1 were provided on the sidewall portion SW of the first embodiment, and an effect in the case where the outer R portion R2 and the linear portion S1 were provided on the sidewall portion SW was verified.

Since only the outer R portion R2 and the linear portion S1 are provided on the sidewall portion SW of the first embodiment, the central R portion R1 has the single R shape with the constant radius of curvature and is connected to the inner sidewall portion IW.

That is, the inner R portion R3 and the linear portion S2 in Fig. 4 are absent.

In addition, a simulation condition was that the rotor 20 was rotated at a rotation speed same as the predetermined rotation speed in the first embodiment.

As a result, it was found that for stresses at portions same as the inner corner portion P1 (see Fig. 3) and the outer corner portion P2 (see Fig. 3) of the first embodiment, as compared with the first embodiment, the stress corresponding to the inner corner portion P1 was substantially the same as that of the first embodiment, while the stress corresponding to the outer corner portion P2 was reduced by just under 20%.

Next, the computer simulation was performed to obtain the stress applied to the inner and outer corner portions P (inner and outer corner portions P similar to the inner and outer corner portions P in Fig. 3) of the third hole 22C according to the second embodiment when only the inner R portion R3 and the linear portion S2 were provided on the sidewall portion SW of the first embodiment, and an effect in the case where the inner R portion R3 and the linear portion S2 were provided on the sidewall portion SW was verified.

Since only the inner R portion R3 and the linear portion S2 are provided on the sidewall portion SW of the first embodiment, the central R portion R1 has the single R shape with the constant radius of curvature and is connected to the outer sidewall portion OW.

In addition, the simulation condition was that the rotor 20 was rotated at the rotation speed same as the predetermined rotation speed in the first embodiment.

As a result, it was found that for the stresses at portions same as the inner corner portion P1 (see Fig. 3) and the outer corner portion P2 (see Fig. 3) of the first embodiment, the stress at the outer corner portion P2 increased by about 3.0% than that of the comparative example of the first embodiment, but the stress at the inner corner portion P1 was further reduced by about 3.0% than that of the third hole 22C according to the first embodiment.

Therefore, when the outer R portion R2, the linear portion S1, the inner R portion R3, and the linear portion S2 were provided on the sidewall portion SW of the first embodiment (in a case of a state shown in Fig. 4), the stresses applied to the inner and outer corner portions P (inner and outer corner portions P similar to the inner and outer corner portions P in Fig. 3) of the third hole 22C according to the second embodiment were obtained, and an effect in the case where the outer R portion R2, the linear portion S1, the inner R portion R3, and the linear portion S2 were provided was verified.

The simulation condition was that the rotor 20 was rotated at the rotation speed same as the predetermined rotation speed in the first embodiment.

As a result, for the stresses at portions same as the inner corner portion P1 (see Fig. 3) and the outer corner portion P2 (see Fig. 3) of the first embodiment, as compared with the first embodiment, the stress at the inner corner portion P1 was reduced by about 3.0%, while the stress at the outer corner portion P2 was reduced by just under 20%.

When the linear portion S2 has a large angle facing radially inward, a sharp corner portion is formed at a connection portion with the inner R portion R3, and the stress may be concentrated, and thus it is preferable to prevent the linear portion S2 from facing radially inward at a highly sharp angle.

Similarly, when the linear portion S1 has a large angle facing radially outward, a sharp corner portion is formed at a connection portion with the outer R portion R2, and the stress may be concentrated, and thus it is preferable to prevent the linear portion S1 from facing radially outward at a highly sharp angle.

Fig. 5 is a diagram showing inclined states of the linear portions S1 and S2 according to the second embodiment of this disclosure, and is a diagram corresponding to Fig. 2.

As shown in Fig. 5, when a pair of linear portions S2 extend radially inward, it is preferable that an intersection point CP2 is located closer to the third hole 22C than the first hole 22A in which the rotor shaft 21 (see Fig. 1) is disposed, so that the linear portions S2 do not extend radially inward at a sharp angle.

In addition, in order to prevent the linear portion S2 from facing radially inward at a sharp angle, it is preferable that a radially outward angle formed by extension lines (see dotted lines) of the pair of linear portions S2 at the intersection point CP2 where they intersect when the pair of linear portions S2 extend radially inward is an obtuse angle.

Similarly, in order to prevent the linear portion S1 from facing radially outward at a sharp angle, it is preferable that when a pair of linear portions S1 extend radially outward, an intersection point CP1 is within a range of a predetermined distance D1 from the outer sidewall portion OW.

For example, when a separation distance between the first hole 22A and the third hole 22C on the d-axis is set as D2, it is preferable that the predetermined distance D1 is within twice the distance D2, and Fig. 5 shows a case where the intersection point CP1 has a distance from the outer sidewall portion OW substantially equal to D2.

In addition, in order to prevent the linear portion S1 from facing radially outward at a sharp angle, it is preferable that a radially inward angle formed by extension lines (see dotted lines) of the pair of linear portions S1 at the intersection point CP1 where they intersect when the pair of linear portions S1 extend radially outward is an obtuse angle.

As described above, when the sidewall portion SW includes the outer R portion R2 and the linear portion S1, the effect of reducing the stress applied to the outer corner portion P2 is obtained, and when the sidewall portion SW includes the inner R portion R3 and the linear portion S2, the effect of reducing the stress applied to inner corner portion P1 is obtained.

Therefore, when it is desired to reduce the stress applied to the outer corner portion P2, it is sufficient to provide the outer R portion R2 and the linear portion S1 on the sidewall portion SW, and when it is desired to reduce the stress applied to the inner corner portion P1, it is sufficient to provide the inner R portion R3 and the linear portion S2 on the sidewall portion SW.

When the outer R portion R2, the linear portion S1, the inner R portion R3, and the linear portion S2 are provided on the sidewall portion SW, the stresses applied to both the outer corner portion P2 and the inner corner portion P1 can be reduced.

### <Third Embodiment>

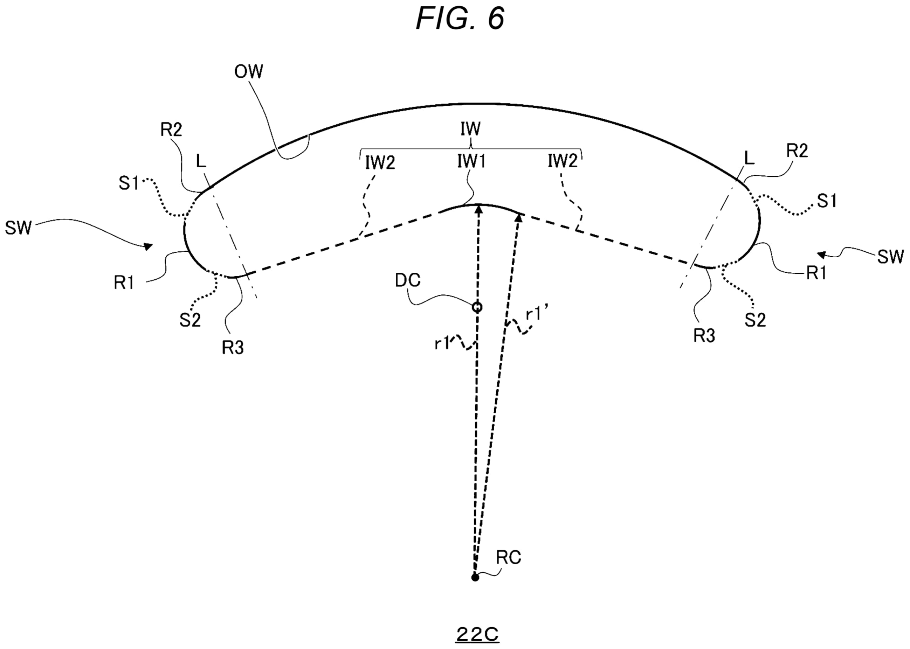

Next, the rotor 20 of the rotary electric machine 1 according to a third embodiment of this disclosure will be described mainly with reference to Fig. 6.

The basic configuration of the third embodiment is the same as that of the second embodiment, and a difference from the second embodiment is only a shape of the inner sidewall portion IW, and thus the shape of the inner sidewall portion IW will be mainly described below, and the description of the same points as those of the second embodiment may be omitted.

Fig. 6 is a diagram showing the shape of the inner sidewall portion IW according to the third embodiment of this disclosure, and is a diagram corresponding to Fig. 4.

As shown in Fig. 6, the inner sidewall portion IW of the third embodiment includes a pair of linear portions IW2 connecting the distance changing portion IW1 and the inner R portions R3.

Specifically, the distance changing portion IW1 included in the inner sidewall portion IW of the third hole 22C according to the third embodiment is formed along the circle centered on the center DC different from the rotation center RC.

Therefore, in the distance changing portion IW1 of the inner sidewall portion IW according to the third embodiment, the distance from the rotation center RC which is the rotation axis changes from the center side toward the outer side (sidewall portion SW side) in the circumferential direction of the third hole 22C.

Specifically, the distance changing portion IW1 changes such that the distance r1' from the rotation center RC on the outer side (sidewall portion SW side) is shorter than the distance r1 from the rotation center RC which is the rotation axis at the center of the third hole 22C in the circumferential direction.

Similarly to the distance changing portion IW1 (inner sidewall portion IW) of the first embodiment, the distance changing portion IW1 may change such that the distance r1' from the rotation center RC on the outer side (sidewall portion SW side) is longer than the distance r1 from the rotation center RC which is the rotation axis at the center of the third hole 22C in the circumferential direction.

Then, in the case of the inner sidewall portion IW of the third embodiment shown in Fig. 6, it was verified how the stresses applied to the inner and outer corner portions P (inner and outer corner portions P similar to the inner and outer corner portions P in Fig. 3) of the third hole 22C of the third embodiment become.

The simulation condition was that the rotor 20 was rotated at the rotation speed same as the predetermined rotation speed in the first embodiment, similarly to the first embodiment and the second embodiment.

As a result, for the stresses at portions same as the inner corner portion P1 (see Fig. 3) and the outer corner portion P2 (see Fig. 3) of the first embodiment, as compared with the first embodiment, the stress at the inner corner portion P1 was reduced by about 3.0%, while the stress at the outer corner portion P2 was reduced by just under 20%.

Further, as compared with the case where the outer R portion R2, the linear portion S1, the inner R portion R3, and the linear portion S2 were provided on the sidewall portion SW of the second embodiment, the same results were obtained for the stress of the inner corner portion P1 and the stress of the outer corner portion P2.

### <Fourth Embodiment>

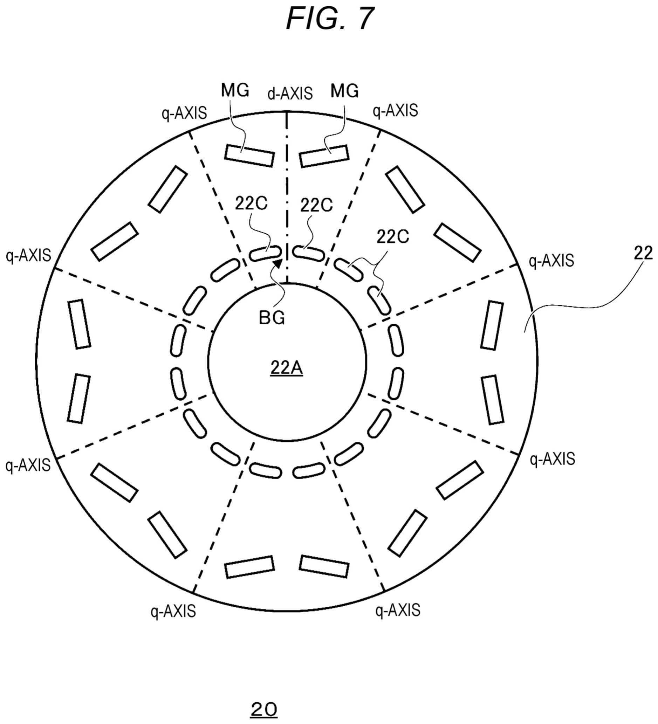

Next, the rotor 20 of the rotary electric machine 1 according to a fourth embodiment of this disclosure will be described mainly with reference to Fig. 7.

Fig. 7 is a diagram showing the rotor 20 of the rotary electric machine 1 according to the fourth embodiment of this disclosure, and is a diagram corresponding to Fig. 5.

The basic configuration of the fourth embodiment is the same as that of the second embodiment, and specifically, similarly to the second embodiment described with reference to Fig. 4, the sidewall portion SW of the third hole 22C according to the fourth embodiment includes the outer R portion R2 (not denoted by a reference numeral), the linear portion S1, the inner R portion R3 (not denoted by a reference numeral), and the linear portion S2.

A difference from the second embodiment is that, as shown in Fig. 7, the plurality of third holes 22C are provided side by side in the circumferential direction for each magnetic pole (region between the q-axes), and specifically, a pair of third holes 22C are provided for each magnetic pole with the d-axis interposed therebetween.

Then, in the case of the inner sidewall portion IW of the fourth embodiment shown in Fig. 7, it was verified how the stresses applied to the inner and outer corner portions P (inner and outer corner portions P similar to the inner and outer corner portions P in Fig. 3) of the third hole 22C according to the fourth embodiment become.

The simulation condition was that the rotor 20 was rotated at the rotation speed same as the predetermined rotation speed in the first embodiment, similarly to the first embodiment to the third embodiment.

As a result, for the stresses at portions same as the inner corner portion P1 (see Fig. 3) and the outer corner portion P2 (see Fig. 3) of the first embodiment, as compared with the first embodiment, the stress at the inner corner portion P1 was reduced by about 5%, while the stress at the outer corner portion P2 was reduced by about 26%.

In addition, even as compared with the second embodiment and the third embodiment, the stress can be further reduced, and it is presumed that this is due to an effect of a bridge portion BG that connects inner and outer sides in the radial direction between the pair of third holes 22C.

### <Fifth Embodiment>

Next, the rotor 20 of the rotary electric machine 1 according to a fifth embodiment of this disclosure will be described.

In the following description, portions different from those of the second embodiment will be mainly described, and description of the same portions may be omitted.

Based on the result of the second embodiment, when the sidewall portion SW is provided with the central R portion R1, the inner R portion R3 connected to the inner sidewall portion IW, and the linear portion S2 connecting the central R portion R1 and the inner R portion R3, the effect of reducing the stress at the inner corner portion P1 (inner corner portion P1 similar to the inner corner portion P1 in Fig. 3) is expected.

Similarly, when the sidewall portion SW is provided with the central R portion R1, the outer R portion R2 connected to the outer sidewall portion OW, and the linear portion S1 connecting the central R portion R1 and the outer R portion R2, the effect of reducing the stress at the outer corner portion P2 (outer corner portion P2 similar to the outer corner portion P2 in Fig. 3) is expected.

Therefore, in a state in which the inner sidewall portion IW and the outer sidewall portion OW of the third hole 22C are formed along the circle centered on the rotation center RC, the computer simulation was performed for the third hole 22C with the central R portion R1, the inner R portion R3 connected to the inner sidewall portion IW, and the linear portion S2 connecting the central R portion R1 and the inner R portion R3 provided on the sidewall portion SW, the stresses applied to the inner and outer corner portions P (inner and outer corner portions P similar to the inner and outer corner portions P in Fig. 3) of the third hole 22C according to the fifth embodiment were obtained, and the effect in the case where the inner R portion R3 and the linear portion S2 were provided on the sidewall portion SW was verified.

That is, for the comparative example of the first embodiment, the effect when the shape of the sidewall portion SW was changed was verified.

Since only the inner R portion R3 and the linear portion S2 are provided on the sidewall portion SW, the central R portion R1 has the single R shape with the constant radius of curvature and is connected to the outer sidewall portion OW.

In addition, the simulation condition was that the rotor 20 was rotated at the rotation speed same as the predetermined rotation speed in the first embodiment, similarly to the first embodiment to the fourth embodiment.

As a result, for the stress at portions same as the inner corner portion P1 (see Fig. 3) and the stress at the outer corner portion P2 (see Fig. 3) according to the first embodiment, as compared with the comparative example of the first embodiment, the stress at the inner corner portion P1 corresponding to the inner corner portion P1 having the highest stress in the comparative example was reduced by just under 20%, and the stress at the outer corner portion P2 was increased by about 3%.

In addition, in the state in which the inner sidewall portion IW and the outer sidewall portion OW of the third hole 22C are formed along the circle centered on the rotation center RC, the computer simulation was performed for the third hole 22C with the central R portion R1, the outer R portion R2 connected to the inner sidewall portion IW, and the linear portion S1 connecting the central R portion R1 and the outer R portion R2 provided on the sidewall portion SW, the stresses applied to the inner and outer corner portions P (inner and outer corner portions P similar to the inner and outer corner portions P in Fig. 3) of the third hole 22C according to the fifth embodiment were obtained, and the effect in the case where the outer R portion R2 and the linear portion S1 were provided on the sidewall portion SW was verified.

That is, for the comparative example of the first embodiment, the effect in the case where the shape of the sidewall portion SW was changed was verified.

Since only the outer R portion R2 and the linear portion S1 are provided on the sidewall portion SW, the central R portion R1 has the single R shape with the constant radius of curvature and is connected to the inner sidewall portion IW.

In addition, the simulation condition was that the rotor 20 was rotated at the rotation speed same as the predetermined rotation speed in the first embodiment, similarly to the first embodiment to the fourth embodiment.

As a result, for the stresses at portions same as the inner corner portion P1 (see Fig. 3) and the outer corner portion P2 (see Fig. 3) of the first embodiment, as compared with the comparative example of the first embodiment, the stress at the inner corner portion P1 was reduced by just under 10%, while the stress at the outer corner portion P2 was reduced by just under 20%.

Further, in the state in which the inner sidewall portion IW and the outer sidewall portion OW of the third hole 22C were formed along the circle centered on the rotation center RC, the computer simulation was performed for the third hole 22C with the central R portion R1, the outer R portion R2, the linear portion S1, the inner R portion R3, and the linear portion S2 provided on the sidewall portion SW, the stresses applied to the inner and outer corner portions P (inner and outer corner portions P similar to the inner and outer corner portions P in Fig. 3) of the third hole 22C according to the fifth embodiment were obtained, and the effect was verified.

The simulation condition was that the rotor 20 was rotated at the rotation speed same as the predetermined rotation speed in the first embodiment, similarly to the first embodiment to the fourth embodiment.

As a result, as compared with the comparative example of the first embodiment, for the stresses at portions same as the inner corner portion P1 (see Fig. 3) and the outer corner portion P2 (see Fig. 3) of the first embodiment, the stress at the inner corner portion P1 was reduced by just under 20%, and the stress at the outer corner portion P2 was also reduced by just under 20%.

Therefore, even when the inner sidewall portion IW and the outer sidewall portion OW of the third hole 22C are formed along the circle centered on the rotation center RC, that is, even when the outer sidewall portion OW and the inner sidewall portion IW are provided on a concentric circle centered on the rotation center RC which is the rotation axis, the stresses applied to the inner and outer corner portions P (inner and outer corner portions P similar to the inner and outer corner portions P in Fig. 3) can be reduced by devising the shape of the sidewall portion SW described above.

In the fifth embodiment, similarly to the fourth embodiment, the plurality of third holes 22C may be provided side by side in the circumferential direction for each magnetic pole, and the stresses applied to the inner and outer corner portions P may be further reduced.

Although this disclosure is described based on specific embodiments, this disclosure is not limited to the above-described embodiments.

In the first embodiment to the third embodiment and the fifth embodiment, the case where the third hole 22C is provided on the d-axis of the magnetic pole is described, but the same result can be obtained even when the third hole 22C is provided on the q-axis, and thus the third hole 22C may be provided on the q-axis.

As described above, the technical scope of this disclosure includes modifications and improvements to the embodiments, and it is apparent to those skilled in the art from the description of the claims.

In addition to the first embodiment to the fourth embodiment, the following supplementary notes are further disclosed.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

### Appendix 1

A rotor of a rotary electric machine, the rotor including:
a rotor shaft serving as a rotation axis;
an annular rotor core having a first hole at a center in which the rotor shaft is disposed; and
a magnet disposed in a circumferential direction of the rotor core and provided for each magnetic pole, in which
the rotor core includes
   a plurality of second holes provided in the circumferential direction and in which the magnet is disposed, and
   a plurality of third holes provided in the circumferential direction and located radially inward with respect to the second holes,
the third hole includes
   an outer sidewall portion,
   an inner sidewall portion located radially inward with respect to the outer sidewall portion, and
   a pair of sidewall portions provided on both sides of the outer sidewall portion and the inner sidewall portion and connecting the outer sidewall portion and the inner sidewall portion,
the inner sidewall portion has a distance changing portion whose distance from a rotation center of the rotation axis changes, and
the inner sidewall portion does not protrude radially inward.

### Appendix 2

The rotor according to Appendix 1, in which
the distance changing portion changes such that the distance from the rotation center becomes longer from a center side toward an outer side in the circumferential direction.

### Appendix 3

The rotor according to Appendix 1 or 2, in which
the sidewall portion includes
a central R portion,
an inner R portion connected to the inner sidewall portion, and
a linear portion connecting the central R portion and the inner R portion.

### Appendix 4

The rotor according to Appendix 1, in which
the distance changing portion changes such that the distance from the rotation center becomes shorter from a center side toward an outer side in the circumferential direction, and
the sidewall portion includes
   a central R portion,
   an inner R portion connected to the inner sidewall portion, and
   a linear portion connecting the central R portion and the inner R portion.

### Appendix 5

The rotor according to Appendix 4, in which
the inner sidewall portion includes a pair of linear portions connecting the distance changing portion and the inner R portion.

### Appendix 6

The rotor according to any one of Appendices 3 to 5, in which
the sidewall portion includes
an outer R portion connected to the outer sidewall portion, and
a linear portion connecting the central R portion and the outer R portion.

### Appendix 7

The rotor according to any one of Appendices 1 to 6, in which
the plurality of third holes are provided side by side in the circumferential direction for each magnetic pole.

In addition to the fifth embodiment, the following Appendixes are disclosed.

### Appendix 9

A rotor of a rotary electric machine, the rotor including:
a rotor shaft serving as a rotation axis;
an annular rotor core having a first hole at a center in which the rotor shaft is disposed; and
a magnet disposed in a circumferential direction of the rotor core and provided for each magnetic pole, in which
the rotor core includes
   a plurality of second holes provided in the circumferential direction and in which the magnet is disposed, and
   a plurality of third holes provided in the circumferential direction and located radially inward with respect to the second holes,
the third hole includes
   an outer sidewall portion,
   an inner sidewall portion located radially inward with respect to the outer sidewall portion, and
   a pair of sidewall portions provided on both sides of the outer sidewall portion and the inner sidewall portion and connecting the outer sidewall portion and the inner sidewall portion,
the outer sidewall portion and the inner sidewall portion are provided on concentric circles centered on a rotation center of the rotation axis, and
the sidewall portion includes
   a central R portion,
   an inner R portion connected to the inner sidewall portion, and
   a linear portion connecting the central R portion and the inner R portion.

### Appendix 10

The rotor according to Appendix 9, in which
the sidewall portion includes
an outer R portion connected to the outer sidewall portion, and
a linear portion connecting the central R portion and the outer R portion.

### Appendix 11

The rotor according to Appendix 9 or 10, in which
the plurality of third holes are provided side by side in the circumferential direction for each magnetic pole.

## Claims

1. A rotor (20) of a rotary electric machine (1), the rotor comprising:
a rotor shaft (21) serving as a rotation axis;
an annular rotor core (22) having a first hole (22A) at a center in which the rotor shaft is disposed; and
a magnet (MG) disposed in a circumferential direction of the rotor core and provided for each magnetic pole, wherein
the rotor core includes
a plurality of second holes (22B) provided in the circumferential direction and in which the magnet is disposed, and
a plurality of third holes (22C) provided in the circumferential direction and located radially inward with respect to the second holes,
the third hole includes
an outer sidewall portion (OW),
an inner sidewall portion (IW) located radially inward with respect to the outer sidewall portion, and
a pair of sidewall portions (SW) provided on both sides of the outer sidewall portion and the inner sidewall portion and connecting the outer sidewall portion and the inner sidewall portion,
the inner sidewall portion has a distance changing portion (IW1) whose distance from a rotation center of the rotation axis changes, and
the inner sidewall portion does not protrude radially inward.

2. The rotor according to claim 1, wherein
the distance changing portion changes such that the distance from the rotation center becomes longer from a center side toward an outer side in the circumferential direction.

3. The rotor according to claim 1 or 2, wherein
the sidewall portion includes
a central R portion (R1),
an inner R portion (R3) connected to the inner sidewall portion, and
a linear portion (S2) connecting the central R portion and the inner R portion.

4. The rotor according to claim 1, wherein
the distance changing portion changes such that the distance from the rotation center becomes shorter from a center side toward an outer side in the circumferential direction, and
the sidewall portion includes
a central R portion,
an inner R portion connected to the inner sidewall portion, and
a linear portion connecting the central R portion and the inner R portion.

5. The rotor according to claim 4, wherein
the inner sidewall portion includes a pair of linear portions connecting the distance changing portion and the inner R portion.

6. The rotor according to any one of claims 3 to 5, wherein
the sidewall portion includes
an outer R portion (R2) connected to the outer sidewall portion, and
a linear portion (S1) connecting the central R portion and the outer R portion.

7. The rotor according to any one of claims 1 to 6, wherein
the plurality of third holes are provided side by side in the circumferential direction for each magnetic pole.
